# EUROPEAN PATENT SPECIFICATION

(11) **EP 0 464 404 B1**
(45) Date of publication and mention of the grant of the patent: **14.09.1994**
(21) Application number: 91109510.7
(22) Date of filing: 10.06.1991
(51) Int. Cl.: G01P 3/487

(54) **Device for determining the relative rotational speed between the races of a rolling contact bearing**
Vorrichtung zur Erfassung der Relativgeschwindigkeit zwischen dem Innen- und dem Aussenring eines Wälzlagers
Dispositif pour déterminer la vitesse relative de rotation entre les surfaces de roulement d'un palier

(30) Priority: 04.07.1990 IT 6748990
(43) Date of publication of application: 08.01.1992
(73) Proprietor: SKF INDUSTRIE S.P.A., I-10123 Torino (IT)
(72) Inventor: Moretti, Roberto, I-10020 Cambiano (Torino) (IT); Vignotto, Angelo, I-10134 Torino (IT)
(74) Representative: Lotti, Giorgio

(56) References cited:
- EP-A- 0 250 275
- DE-A- 1 281 549
- DE-A- 2 942 873
- US-A- 3 786 272
- US-A- 4 171 495

## Description

This invention relates to a device for determining the relative rotational between the races of a rolling contact bearing.

It is known that lately the installation of special control circuits on vehicles has become very popular; these special circuits are of the kind:
- ABS, that have the aim of preventing the vehicle's wheels from blocking during the braking;
- ASR, that are meant to control the correct traction of the vehicle;
- speed gauge device, such as "speedometer";
- distance gauge devices, such as "mileometer".

The gauge systems that are conventionally used are realised with common basic components, such as: phonic wheel, detection sensor, local processing unit and oleodynamic shunt connection unit.

The phonic wheel is usually a toothed ring that is mounted on the rotating part to be kept under control while the sensor, may it be active or passive, is installed on the chassis facing the toothed part of the phonic ring at a prearranged distance.

The electric signals coming from the single sensor are sent to the local processing unit that determines, in the case of ABS systems, the differences between the revolving speeds of the wheels.

The passive kind of sensors that are used to measure reluctance variations need no power supply; anyway, these sensors necessarily have to be mounted outside the bearing and thus they are located in a position that is not protected from eventual crashes, polluting agents and other dangerous damages.

In such arrangements, the sensor is negatively affected by the metallic particles due to the wear of the brakes that are located nearby the sensors and by the high temperatures that are produced by the brake disks. Moreover the sensors need a proper adjustment to be done by the user during the assembling.

This kind of sensors is further handicapped in that it is impossible to measure revolving speeds down to 0 km/h.

DE-A-2 942 873 discloses a rotary electrical pulse generator wherein a cylindrical permanent magnet is fixed on a rotating shaft. Two identical toothed rings of a soft magnetic material are fixed at opposite ends of the magnet permanent. Each ring has peripheral axially disposed teeth facing the teeth of the opposite ring. A stationary sensor is fitted on the shaft support adjacent to a stationary magnetizable body so that the sensor and said body are both within the space between the teeth of the two rings so as to measure the magnetic flux between the teeth of the two rings and to generate electric pulses in response to magnetic flux variations.

DE-A-1 281 549 relates to a rotary electrical pulse generator comprising a rotary magnetic ring having a plurality of peripheral axially disposed magnetic poles. The magnetic ring is axially displaced from a stationary radial plate supporting a Hall probe.

The above identified devices have a rather cumbersome structure that does not render them suitable for application on the races of rolling contact bearings.

EP-A-0 250 275 refers to a device for measuring the revolving speed or angular displacement between the races of a rolling contact bearing according to the pre-characterising portion of Claim 1. A sensor is carried by a screen mounted on the stationary race. The sensor faces radially a multipolar magnetic ring supported by a non-magnetic ring integral with the rotating race.

It is an object of the present invention to disclose a device that allows to overcome the drawbacks of the prior art.

In particular, it is an object of this invention to disclose a device for determining the relative rotational between the races of a rolling contact bearing as indicated in Claim 1.

Preferred embodiments of the device according to the present invention will now be described referring to the enclosed drawings, in which:
- Fig. 1: shows an embodiment of the device;
- Figs. 2 and 3: are partial perspective views of different embodiments of the device; and
- Fig. 4: is a different embodiment of the device shown in Fig. 1.

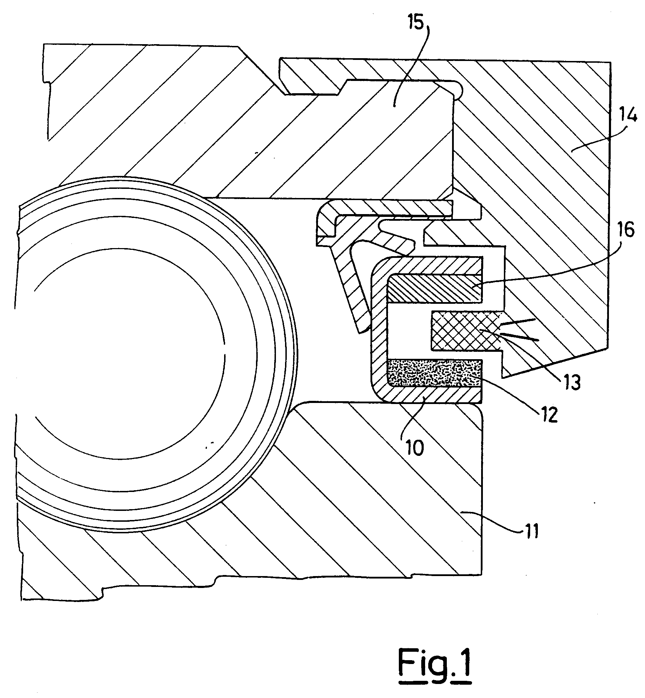

Referring to Fig. 1, a rolling contact bearing for supporting the wheel of a vehicle has a first support or screen 10, that is integral with the rotating race 11 of the bearing.

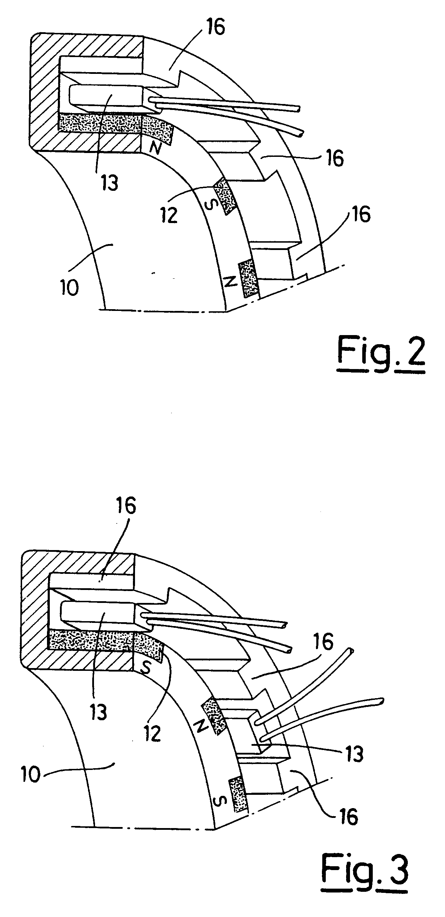

The screen 10 carries a magnetized ring 12 with couples of poles alternating in sign NSN (as it is shown in Figs. 2 and 3. On the screen 10, facing the magnetized ring 12, a toothed metallic ring is also located with its own teeth 16 facing the magnetized portions of ring 12 (see Figs. 2 and 3).

A Hall effect magnetic sensor or a magnetoresistance 13 is held by a second support or screen 14 integral with the fixed race 15 of the hearing, and it is inserted between the magnetized ring 12 and the toothed ring 16.

The Hall effect magnetic sensor 13, that has integrated electronic control circuits, is power supplied with the vehicle's voltage.

The signal that is fed to the local processing unit is a function of the n variations of the magnetic field to which the sensor is exposed during a revolution of the bearing. The Hall effect sensor may be of the kind: linear, unipolar, bipolar, bipolar with memory.

The magnetic sensor 13, as shown in Fig. 2, is immerged in the magnetic field that is generated by the n magnets 12 and that is conveyed by the metal teeth 16 facing the magnets.

The magnetized ring 12 can be made of rubber, filled with magnetic elements and fixed or vulcanized to a supporting ring that can also act as the closing memeber of the magnetic flux. The ring 12 can otherwise be made of plastic and filled with magnetic elements, or made of magnetic sinters or even of elementar magnets.

The material of which the ring is made can have isotropic or anisotropic characteristics.

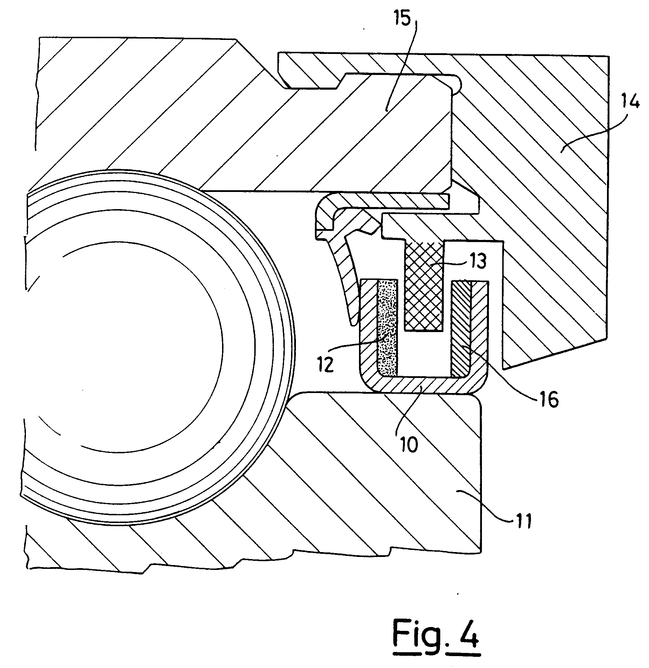

The unit comprising the magnetized ring 12 and the toothed ring 16 can either be disposed axially, as shown in fig. 1, or radially in fig. 4, without changing any of the benefits of this invention.

The rotation of the screen 10 with the two ring 12 and 16 that are fixed on it causes the Hall effect magnetic sensor 13 to detect variations of the intensity and of the sign of the magnetic field.

After some necessary processing, the signal that is proportional to the speed is emitted by the electronics that are integrated with the Hall effect sensor 13, and is sent to the local processing unit.

The sensor unit can also consist of two or more magnetic sensors 13 with integrated electronics in order to allow detection of the rotation by using a smaller number of magnetic poles, the frequencies obtained by the single ones being equal.

For this application the sensors have to be shifted by a suitable angle as shown schematically in Fig. 3.

The same multi-sensing system can also be utilized for detecting the direction of rotation of the wheel by adding a further output.

## Claims

1. A device for determining the relative rotational speed between the races (11,15) of a rolling contact bearing comprising a magnetised ring (12) with couples of poles alternating in sign carried by a first screen (10) of annular shape, which is fixed to the rotating race (11) of the bearing, said magnetised ring (12) facing at least one magnetic sensor (13) carried by a second screen (14) fixed to the stationary race (15) of the bearing; characterised in that carried by said first screen (10) is a toothed metallic ring (16) coaxial to and spaced apart from said magnetised ring (12); said toothed metallic ring (16) having teeth facing the poles of the magnetised ring (12); the magnetic sensor (13) being inserted between said toothed metallic ring (16), said magnetised ring (12) and said first screen (10) so as to be protected towards the outside of the bearing by means of said toothed metallic ring (16), said magnetised ring (12), said first screen (10) and said second screen (14).

2. A device according to claim 1 wherein said magnetised ring (12) and said metallic toothed ring (16) are fitted on opposite facing walls of said first screen (10).

3. A device according to claim 1, comprising a plurality of magnetic sensors (13) the respective location of which is shifted by multiples or fractions of half a pitch between couples of adjacent poles.

## Patentansprüche

1. Vorrichtung zum Erfassen der Relativgeschwindigkeit zwischen dem Innen- und dem Außenring (11, 15) eines Wälzkontaktlagers, das einen magnetisierten Ring (12) mit wechselnd gepolten Polpaaren beinhaltet, der durch eine erste ringförmige Abschirmung (10) getragen wird, die auf dem rotierendem Lagerring (11) des Lagers befestigt ist, wobei der magnetisierte Ring (12) mindestens einem Magnetsensor (13) gegenüberliegt, der durch eine zweite Abschirmung (14) getragen wird, die auf dem stationären Ring (15) des Lagers befestigt ist; dadurch gekennzeichnet, daß der durch die erste Abschirmung (10) getragene Ring ein mit Zähnen versehener metallischer Ring (16) ist, der koaxial zu und von dem magnetisiertem Ring (12) beabstandet ist; daß der mit Zähnen versehene metallische Ring (16) Zähne aufweist, die den Polen des magnetisierten Ringes (12) gegenüberliegen; daß der Magnetsensor (13) zwischen dem mit Zähnen versehenen metallischen Ring (16), dem magnetisierten Ring (12) und der ersten Abschirmung (10) eingesetzt ist, um mittels des mit Zähnen versehenen metallischen Ringes (16), des magnetisierten Ringes (12), der ersten Abschirmung (10) und der zweiten Abschirmung (14) gegenüber dem Lager nach außen hin geschützt zu sein.

2. Vorrichtung nach Anspruch 1, bei der der magnetisierte Ring (12) und der metallische mit Zähnen versehene Ring (16) auf den gegenüberliegenden Stirnwänden der ersten Abschirmung (10) befestigt sind.

3. Vorrichtung nach Anspruch 1, die eine Vielzahl von Sensoren (13) beinhaltet, deren entsprechende Position durch Vielfache oder durch Bruchteile des halben Abstandes zwischen Paaren von angrenzenden Polen verschoben ist.

## Revendications

1. Dispositif pour déterminer la vitesse de rotation relative entre les bagues de roulement (11, 15) d'un palier à roulement, comprenant un anneau magnétisé (12) avec des couples de pôles de signe alterné supporté par un premier écran (10) de forme annulaire fixé la bague de roulement tournante (11) du palier, ledit anneau magnétisé (12) étant en regard d'au moins un capteur magnétique (13) supporté par un second écran (14) fixé à la bague de roulement fixe (15) du palier ; caractérisé en ce que, supporté par ledit premier écran (10), se trouve un anneau métallique denté (16) coaxial audit et espacé dudit anneau magnétisé (12), ledit anneau métallique denté (16) ayant des dents en regard des pôles de l'anneau magnétisé (12) ; le capteur magnétique (13) étant inséré entre ledit anneau métallique denté (16), ledit anneau magnétisé (12) et ledit premier écran (10), de façon à être protégé vers l'extérieur du palier au moyen dudit anneau métallique denté (16), dudit anneau magnétisé (12), dudit premier écran (10) et dudit second écran (14).

2. Dispositif selon la revendication 1, dans lequel ledit anneau magnétisé (12) et ledit anneau denté métallique (16) sont montés sur des parois en regard opposées dudit premier écran (10).

3. Dispositif selon la revendication 1, comprenant une pluralité de capteurs (13) dont l'emplacement respectif de chacun est décalé selon des multiples ou des fractions de moitié d'un pas entre les couples de pôles adjacents.
